Europäisches Patentamt

European Patent Office

Office européen des brevets

(11) Veröffentlichungsnummer : **0 108 984**
**B1**

(12) # EUROPÄISCHE PATENTSCHRIFT

(45) Veröffentlichungstag der Patentschrift :
15.03.89

(51) Int. Cl.⁴ : **H 02 B 13/02**

(21) Anmeldenummer : 83110834.5

(22) Anmeldetag : 26.10.83

(54) **Anordnung zum Erfassen von drucksteigernden Störlichtbögen in luftisolierten, geschotteten oder gekapselten Schaltanlagen.**

(30) Priorität : 12.11.82 DE 3241974

(43) Veröffentlichungstag der Anmeldung :
23.05.84 Patentblatt 84/21

(45) Bekanntmachung des Hinweises auf die Patenterteilung : 15.03.89 Patentblatt 89/11

(84) Benannte Vertragsstaaten :
AT SE

(56) Entgegenhaltungen :
DE—A— 1 665 637
DE—B— 1 082 323

(73) Patentinhaber : **Siemens Aktiengesellschaft Berlin und München**
**Wittelsbacherplatz 2**
**D-8000 München 2 (DE)**

(72) Erfinder : **Hartmann, Erwin**
**Friedrich-Bauer-Strasse 34**
**D-8520 Erlangen (DE)**

EP 0 108 984 B1

**Beschreibung**

Die Erfindung betrifft eine Anordnung zum Erfassen von drucksteigernden Störlichtbögen nach dem Oberbegriff des Patentanspruchs 1.

Bei einer aus der Siemens-Druckschrift « Störlichtbogenzeiten auf weniger als 100 ms reduzieren » (Bestellnummer E 139/1692-220 § 113395 SB 7792) bekannten Anordnung der vorgenannten Art sind Druckschalter mit einer einen elektrischen Kontakt betätigenden schwingungsfähigen Masse in Form einer federnd gelagerten Platte verwendet, die jeweils in den während des Betriebes aus Sicherheitsgründen nicht zugänglichen geschotteten oder gekapselten Räumen der Schaltanlagen (Leistungsschalterraum, Sammelschienenraum u. dgl.) angeordnet sein müssen. Die nachgeordnete Relaisschaltung meldet jedes Ansprechen der Druckschalter und bewirkt bei gleichzeitiger Überstromanregung die Auslösung des oder der zugeordneten Leistungsschalter in den Einspeisestellen. Die bekannten Druckschalter sind erschütterungsempfindlich und öffnen und schließen gegebenenfalls im Rhythmus der von der Störlichtbogenleistung mit doppelter Netzfrequenz abhängigen Druckschwankung. Diese Druckschalter sprechen auf kleine oder mittlere Druckanstiege bei kleinen oder mittleren, die Störlichtbögen speisenden Kurzschlußströme nicht an und geben auch bei großen Kurzschlußströmen nur kurz und mit unterschiedlicher Dauer Kontakt, der an sich nicht zum einwandfreien Betätigen der Relaisschaltung ausreicht, so daß die Relaisschaltung zusätzliche elektrische Impulsdehner bekannter Art enthalten muß. Außerdem sind gegen äußere störende elektrische Einflüsse auf die Impulsdehner zusätzliche Abschirmungen der elektrischen Leitungen vom Druckschalter und/oder Schutzbeschaltungen der besagten Impulsdehner notwendig.

Abgesehen von der während des Betriebes fehlenden Zugänglichkeit der Druckschalter sind diese wegen ihres nicht definierbaren Ansprechwertes auch bei abgeschalteten Schaltanlagen nur auf ihre Funktionsfähigkeit schlechthin überprüfbar.

Der Erfindung liegt die Aufgabe zugrunde, eine Anordnung der eingangs genannten Art zu schaffen, die ohne Impulsdehner in der Relaisschaltung auskommt und schon bei kleinen, die Störlichtbögen speisenden Kurzschlußströmen auch bei schwankenden Drücken in den überwachten Räumen sicher anspricht und eine Zugänglichkeit und Prüfung der Druckschalter während des Betriebes auf einfache Weise zuläßt, wobei mit einfacheren Mitteln und vereinfachter Installation eine wesentlich verbesserte Arbeitsweise der Anordnung erreicht wird.

Die Lösung der gestellten Aufgabe gelingt durch die kennzeichnenden Maßnahmen des Patentanspruchs 1.

Vorteilhafte Ausgestaltungen der Erfindung sind Gegenstand von weiteren Unteransprüchen.

Ein Ausführungsbeispiel der Erfindung ist nachfolgend anhand der schematischen Zeichnung näher erläutert.

Der pneumatische Druckschalter DS ist durch Verbindungsschläuche L und geeignete T- oder kreuzförmige Schlauchverbinder V mit den Auslässen von Rückschlagventilen RV verbunden, deren Einlässe über Verbindungsschläuche L1, L2, L3 und gasdichte Durchführungen DU mit den zu überwachenden, voneinander getrennten Räumen R1, R2, R3 der Schaltanlage verbunden sind, in denen die Einlaßöffnungen Ö1, Ö2, Ö3 der Verbindungsschläuche münden.

Die pneumatischen Druckschalter und gegebenenfalls ihre Rückschlagventile können vorteilhafterweise in einem während des Betriebes leicht zugänglichen Niederspannungsschrank untergebracht sein. Dort kann auch ein weiterer Einlaß ES mit zusätzlichem Rückschlagventil RVZund einem zusätzlichen Verbindungsschlauch LZ samt einem Kupplungsstück K vorgesehen werden, der zum Messen des Ansprechdruckes des Druckschalters mit einer beweglichen Meßeinrichtung ME dient. Die bewegliche Meßeinrichtung ME besteht aus einer mit einem Druckerzeuger DE nach Art eines Gummiballes verbundenen Manometer MA mit Entlüftungsschraube ES.

Als pneumatische Druckschalter DS können handelsübliche Ausführungen von Membran- oder Kolbendruckschaltern verwendet werden, die bei einem Überdruck von etwa 5 mbar einschalten und bei einem merklich geringeren Druck von etwa 2 mbar wieder ausschalten. Die ihnen zugeordneten bekannten Rückschlagventile können ohne Ventilfedern so installiert sein, daß ihre abdichtenden Ventilkörper mit Durchlaßrichtung (Pfeilrichtung) senkrecht nach oben installiert sind, so daß die Rückschlagventile der nicht selbst vom Druckanstieg betroffenen Räume durch das Eigengewicht ihres Ventilkörpers und durch die beginnende Druckerhöhung im System schließen. Durch Ventile ohne Federn erreicht man erwünschterweise einen Öffnungsdruck nahe Null. Die Rohrleitungen bestehen vorzugsweise aus handelsüblichen Kunststoffschläuchen mit einem Innendurchmesser von 5 mm und einer Wandstärke von 1,5 mm.

Um das Ausschalten des Druckschalters DS auch bei geschlossenen, gut dichtenden Rückschlagventilen nach kurzer Zeit — wenige s — sicherzustellen, kann an der Verbindung zwischen den Auslässen der Rückschlagventile und dem pneumatischen Druckschalter eine Entlüftungsdüse ED mit definierter Öffnung vorgesehen werden.

Die Verbindung mehrerer Kunststoffschläuche miteinander vor dem Druckanschluß des Membrandruckschalters bzw. über Eck liegender Schläuche geschieht über entsprechende Verbindungsstücke V in X-, T- oder L-Form. Die Rückschlagventile können mit geraden oder winkelförmigen Anschlußstutzen ausgeführt sein, um zu erleichtern, daß bei vertikaler Lage jede Verbindung möglichst kurz und geradlinig verlegt werden kann. Die einzelnen Verbindungsschläuche sollen möglichst kurz bemessen sein, um auch kleine Druckanstiege zum Betätigen der pneumatischen Druckschalter mit kurzem Zeitverzug ausnutzen zu können.

Im Bedarfsfall können den Rückschlagventilen auch mehrere pneumatische Druckschalter zugeordnet sein. Ferner ist es insbesondere bei durchgehenden Sammelschienenräumen möglich, nur jedem zweiten Feld eine Einlaßöffnung Ö mit Rückschlagventil zuzuordnen.

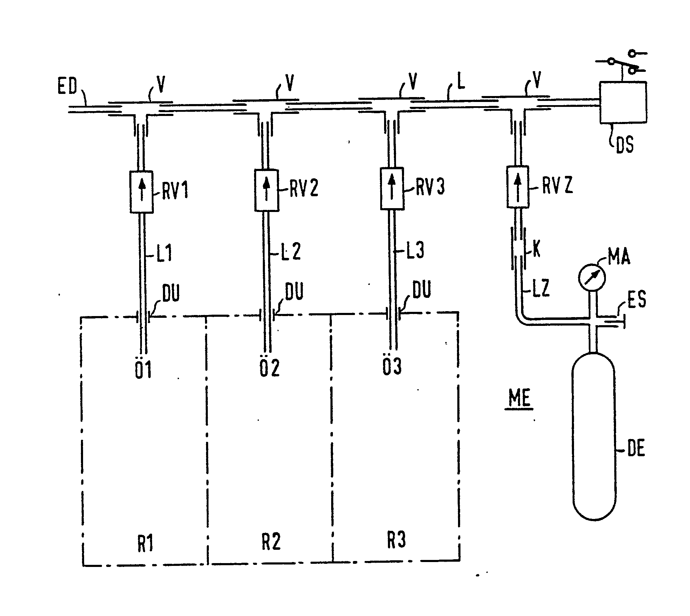

### Patentansprüche

1. Anordnung zum Erfassen von drucksteigernden Störlichtbögen in luftisolierten Schaltanlagen, mit gekapselten oder geschotteten Räumen (R1, R2, R3) mit druckabhängigen elektrischen Schaltgeräten, die zusammen mit überstromabhängigen Schaltgeräten über eine Relaisschaltung einen der jeweiligen Schaltanlage zugeordneten Leistungsschalter in ·der betreffenden Einspeisestelle auslöst, dadurch gekennzeichnet, daß außerhalb der geschotteten Räume (R1, R2, R3) an während des Betriebes zugänglicher Stelle mindestens ein nur auf Druckanstieg ansprechender pneumatischer Druckschalter (DS) mit einem bestimmten, meßbaren Einschaltdruck über gesonderte druckabbauverzögernd wirkende Rückschlagventile (RV1, RV2, RV3) mit in die zu überwachenden· Räume der Schaltanlagen mündenden elektrisch isolierenden Rohrleitungen (L1, L2, L3) verbunden ist.

2. Anordnung nach Anspruch 1, dadurch gekennzeichnet, daß die pneumatischen Druckschalter (DS) über ein zusätzliches Rückschlagventil (RVZ) und eine zugeordnete Rohrleitung (LZ) an einen Druckerzeuger (DE) mit Druckmeßeinrichtung (ME) anschließbar ist.

3. Anordnung nach Anspruch 1 oder 2, dadurch gekennzeichnet, daß die Rückschlagventile (RV1, RV2, RV3, RVZ) vertikal angeordnet sind und ihre Ventilkörper ohne Ventilfedern ausschließlich durch Eigengewicht schließen.

4. Anordnung nach einem der vorhergehenden Ansprüche, dadurch gekennzeichnet, daß die Rohrleitungen aus Verbindungsschläuchen (L, L1, L2, L3, LZ) und Verbindungsstücken (V, K) aus Kunststoff bestehen.

5. Anordnung nach einem der vorhergehenden Ansprüche, dadurch gekennzeichnet, daß das Ausschalten des pneumatischen Druckschalters (DS) in gewünschter Zeit durch eine Entflüftungsdüse (ED) bewirkt wird.

### Claims

1. An arrangement for detecting pressureincreasing fault arcs in air-insulated switchgears having sealed or metal-clad areas (R1, R2, R3) by means of pressure-dependent switching devices that, together with excess-current-dependent switching devices, trigger through a relay circuit a power switch associated with the respective switchgear at the infeed point concerned, characterised in that at places outside the metal-clad areas (R1, R2, R3) that are accessible during operation at least one pneumatic pressure switch (DS) that responds only to an increase in pressure and has a specified, measurable cut-in pressure is connected, by way of separate non-return valves (RV1, RV2, RV3) acting to retard decreases in pressure, to electrically insulated pipe-lines opening into the spaces to be monitored.

2. An arrangement according to claim 1, characterised in that the pneumatic pressure switch (DS) can be connected by way of an additional non-return valve (RVZ) and an associated pipeline (LZ) to a pressure generator (DE) having a pressure-measuring device (ME).

3. An arrangement according to claim 1 or claim 2, characterised in that the non-return valves (RV1, RV2, RV3) are arranged vertically and that their valve bodies close without valve springs, solely under their own weight.

4. An arrangement according to any one of the preceding claims, characterised in that the pipeline consists of connecting hoses (L, L1, L2, L3, LZ) and connecting pieces of plastics material.

5. An arrangement according to any one of the preceding claims, characterised in that switching off of the pneumatic pressure switch (DS) is effected when desired by an exhaust nozzle (ED).

### Revendications

1. Dispositif de détection d'arcs électriques parasites entraînant une augmentation de la pression dans des installations de distribution d'électricité à isolation par l'air, comprenant des chambres·(R1, R2, R3) blindées ou étanches et des appareils électriques de coupure en fonction de la pression qui, de paire avec des appareils de coupure à maximum de courant, déclenchent, par un circuit à relais un interrupteur de puissance associé à l'installation de distribution au point d'alimentation concerné, caractérisé en ce que, à l'extérieur des chambres étanches (R1, R2, R3) et en des emplacements accessibles pendant le fonctionnement, un interrupteur manométrique pneumatique (DS), ne réagissant qu'à un accroissement de la pression et ayant une pression d'enclenchement déterminée et mesurable, est relié, par des clapets anti-retour (RV1, RV2, RV3) distincts et retardant la diminution de la pression, à des conduits (L1, L2, L3) électriquement isolants et débouchant dans les chambres des installations de distribution qui doivent être surveillées.

2. Dispositif suivant la revendication 1, caractérisé en ce que l'interrupteur manométrique pneumatique (DS) peut être raccordé par un clapet anti-retour supplémentaire (RVZ) et par un conduit (LZ) associé, à une source de pression (DE) à dispositif de mesure de la pression (ME).

3. Dispositif suivant la revendication 1 ou 2, caractérisé en ce que les clapets anti-retour (RV1, RV2, RV3, RVZ) sont disposés verticalement et leur corps de soupape se ferme uniquement par leur poids propre, sans ressort de soupape.

4. Dispositif suivant l'une des revendications précédentes, caractérisé en ce que les conduits sont constitués de tuyaux de liaison souples (L, L1, L2, L3, LZ) et de pièces de liaison (V, K) en matière plastique.

5. Dispositif suivant l'une des revendications précédentes, caractérisé en ce que l'ouverture de l'interrupteur manométrique pneumatique (DS) est provoqué en temps voulu par une tuyère de désaération (ED).